# FASCICULE DE BREVET EUROPEEN

(11) **EP 0 576 316 B1**
(45) Date de publication et mention de la délivrance du brevet: **27.08.1997**
(21) Numéro de dépôt: 93401422.6
(22) Date de dépôt: 03.06.1993
(51) Int. Cl.: F16J 15/32

(54) **Joint flexible à jaquette**
Flexibele Dichtung mit Ummantelung
Flexible sealing with cover jacket

(30) Priorité: 05.06.1992 FR 9206843
(43) Date de publication de la demande: 29.12.1993
(73) Titulaire: COMMISSARIAT A L'ENERGIE ATOMIQUE, 75015 Paris Cédex 15 (FR)
(72) Inventeur: De Villepoix, Raymond, F-26290 Donzere (FR); Abbes, Claude, F-42029 Saint Etienne (FR); Besson, Robert, F-49100 Angers (FR); Rouaud, Christian, F-07700 Bourg Saint Andeol (FR); Tressol, Michel, F-42270 Saint Priest en Jarez (FR)
(74) Mandataire: Dubois-Chabert, Guy

(56) Documents cités:
- EP-A- 0 161 149
- DE-A- 3 907 614
- FR-A- 2 224 029
- US-A- 3 268 984

## Description

### DOMAINE DE L'INVENTION

L'invention concerne l'étanchéité entre au moins deux volumes où règnent des températures et des pressions différentes. C'est le cas dans certaines parties des turbopropulseurs utilisés sur les avions civils et militaires, en particulier pour contrôler le débit de fuites entre les différents étages des aubes, ou pour permettre la déformation de pièces dans les parties chaudes de ces turbopropulseurs. Un tel joint est également prévu pour constituer une solution vis-à-vis des problèmes d'échauffement au niveau des gouvernes du futur avion spatial "HERMES", lors de ses rentrées dans les couches denses de l'atmosphère.

### ART ANTERIEUR ET PROBLEME POSE

Il est largement connu d'utiliser des joints d'étanchéité pour séparer deux volumes dans lequel se trouvent des fluides différents, à des températures différentes et sous des pressions différentes. Par contre, il est plus difficile d'assurer une telle étanchéité lorsque les différentes parois séparant ces deux volumes ont des mouvements relatifs l'une par rapport à l'autre. C'est le cas entre le rotor et le stator d'un turbopropulseur, au niveau des différents étages d'aubes du compresseur à haute pression. En effet, l'extrémité des pales du stator touche presque la périphérie du rotor. Il est alors utile de gérer une étanchéité permettant un écoulement de fluide limité entre les deux volumes séparés, c'est-à-dire assurant une importante perte de charge. D'autre part, dans ce cas, la vitesse relative entre les éléments fixe et mobile est très importante.

Dans d'autres cas, il peut s'avérer intéressant d'obtenir quasiment un contact entre les parties fixe et mobile, de manière à ce que le joint face office de filtre en retenant certaines impuretés ayant tendance à passer d'un volume dans l'autre. On se trouve alors dans le cas de faibles vitesses relatives entre les pièces fixe et mobile.

Toutefois, ces joints ne sont pas étudiés pour assurer d'autre part une étanchéité statique entre l'un des deux volumes et un troisième volume différent. En effet, ceci est souvent le cas lorsque le carter statique est composé de deux brides comprimant une pièce quelque peu élastique, telle qu'un joint dynamique assurant une étanchéité entre deux volumes internes, comprise entre ledit carter et un rotor intérieur.

Le but de l'invention est de proposer un joint flexible assurant à la fois une étanchéité statique entre deux premiers milieux et une étanchéité dynamique ou semi-dynamique entre l'un des deux premiers milieux et un troisième milieu.

D'autre part, par le document de brevet européen EP-A-0 161 149, on connaît un joint flexible assurant l'étanchéité entre deux volumes où règnent des pressions différentes, comprenant :
- une âme élastique ;
- une première enveloppe ayant une forme de cavité non fermée, placée autour de l'âme pour assurer l'étanchéité entre un premier milieu et les deux volumes;
Une deuxième enveloppe placée dans la première envellope et autour de l'ame et ayant la forme d'une cavité non fermée.

### RESUME DE L'INVENTION

A cet effet, l'objet principal de l'invention est un joint flexible assurant l'étanchéité entre deux volumes où règnent des pressions différentes, comprenant :
- une âme élastique ;
- une première enveloppe ayant une forme de cavité non fermée, placée autour de l'âme pour assurer l'étanchéité entre un premier milieu et les deux volumes ;
- une deuxième enveloppe placée dans la première enveloppe et autour de l'âme et ayant la forme d'une cavité non fermée.

Selon l'invention, la deuxième enveloppe se prolonge à travers la partie non-fermée de la première enveloppe dans sa partie non fermée par une jaquette formée de deux surfaces planes parallèles entre elles et perpendiculaires ou parallèles à l'axe de l'âme et par l'extrémité desquelles l'étanchéité, est assurée entre un deuxième milieu et un troisième milieu constituant les deux volumes et délimités tous les deux par un élément fixe et un élément mobile.

On appelle donc "jaquette" les deux pans de la deuxième enveloppe.

De manière générale, l'âme est élastique et est constituée d'un ressort hélicoïdal, les enveloppes ayant chacune une section cylindrique.

La réalisation principale de l'invention prévoit l'utilisation d'une troisième enveloppe placée autour du ressort dans la deuxième enveloppe pour maintenir le ressort et empêcher la deuxième enveloppe de pénétrer entre les spires du ressort.

Une réalisation principale du joint selon l'invention est que celui-ci est annulaire, les enveloppes étant toriques.

Dans ce cas, il est préférable que la troisième enveloppe soit en métal ductile et ait la forme d'une surface torique dont le cercle générateur ne se referme pas sur lui-même.

La deuxième enveloppe est de préférence métallique, mais est plus souple que la première et la troisième enveloppes.

Dans ce cas, de préférence, la deuxième enveloppe est en matière synthétique ou en matière minérale.

La première enveloppe est de préférence en un métal ductile et a la forme d'une surface torique dont le cercle générateur ne se ferme pas sur lui-même et se prolonge par deux surfaces planes circulaires parallèles entre elles et perpendiculaires ou parallèles à l'axe de l'âme, mais moins longues que les surfaces parallèles de la jaquette de la deuxième enveloppe.

### LISTE DES FIGURES

L'invention et ses différentes caractéristiques techniques seront mieux comprises à la lecture de la description suivante, accompagnée de quelques figures représentant respectivement :
- figure 1, en coupe, la réalisation préférentielle du joint selon l'invention ;
- figure 2, une première variante de réalisation du joint selon l'invention ;
- figure 3, une deuxième variante de réalisation du joint selon l'invention ; et
- figure 4, une utilisation spéciale du joint selon l'invention.

### DESCRIPTION DETAILLEE DE L'INVENTION

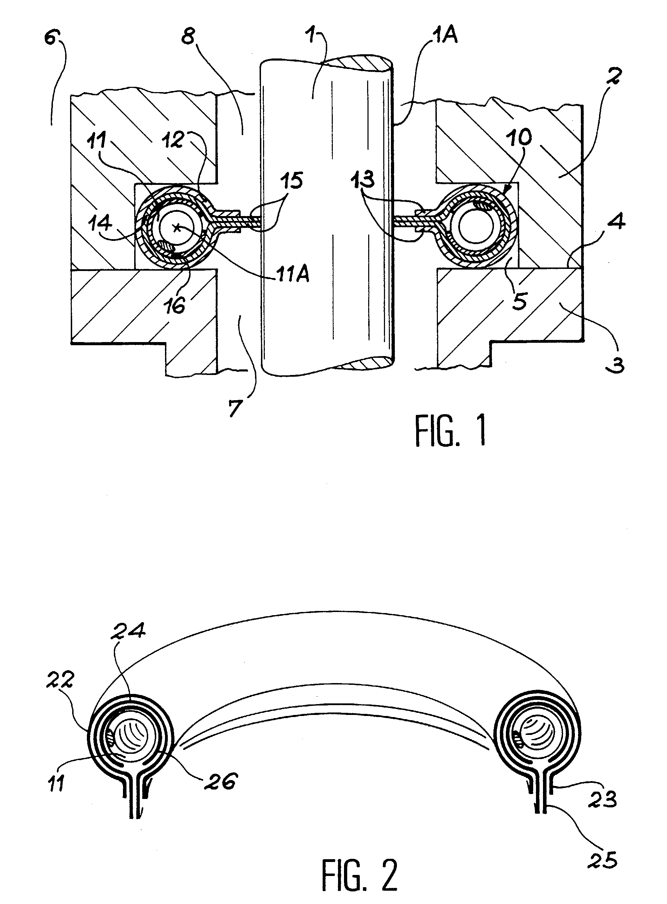

Dans la réalisation de la figure 1, on est en présence de trois milieux différents, en l'occurrence un premier milieu externe 6 et un milieu interne. Ce dernier doit en outre être partagé technologiquement en deux volumes qui sont un deuxième milieu interne 7 et un troisième milieu interne 8. De plus, ces différents milieux sont délimités par un carter fixe constitué de deux parties 2 et 3 qui sont jointives selon un plan de joint 4 et par un élément mobile 1 placé à l'intérieur du carter. Le joint selon l'invention 10 est utilisé principalement pour séparer de façon étanche les deux milieux internes, c'est-à-dire le deuxième milieu 7 et le troisième milieu 8. Une deuxième fonction de ce joint 10 est d'assurer l'étanchéité entre les deux parties 2 et 3 du carter au niveau du plan de joint 4. L'étanchéité à assurer entre les deux milieux internes 7 et 8 est une étanchéité dynamique, tandis que l'étanchéité à assurer entre les deux parties 2 et 3 du carter, au niveau du plan de joint 4 est une étanchéité statique.

D'autre part, le premier et le deuxième milieux internes 7 et 8 contiennent chacun un fluide différent, tant au niveau de la nature, qu'au niveau de la pression et de la température. On peut ainsi imaginer que le joint 10 sépare deux étages dans un compresseur haute pression d'un turbopropulseur et que de l'air y soit comprimé. On peut aussi imaginer que le joint soit baigné dans des gaz de combustion d'un moteur.

L'élément mobile 1 peut être soit un arbre, soit un piston. Ceci signifie que le mouvement relatif de l'élément mobile 1 par rapport au carter 2, 3 peut être soit un mouvement de translation, soit un mouvement de rotation.

Selon l'invention, le joint flexible a la structure suivante. Il comprend en son centre une âme élastique 11 d'axe 11A qui est constituée de préférence d'un ressort hélicoïdal à spires jointives. Dans le cas d'un joint flexible annulaire, ce ressort est refermé sur lui-même et présente à l'état de repos la forme d'un tore. Ceci est le cas de la réalisation représentée sur la figure 1.

Le joint selon l'invention comprend également une première enveloppe 12 placée autour du ressort 11 constituant l'âme élastique pour assurer l'étanchéité entre le premier milieu 6, en l'occurrence le milieu externe, et les deux autres milieux 7 et 8, en l'occurrence les milieux internes.

Un autre élément principal du joint flexible selon l'invention est constitué par une deuxième enveloppe 14 placée dans la première enveloppe 12 et autour du ressort 11. La section de cette deuxième enveloppe 14 a la forme d'une cavité non fermée qui se prolonge dans la direction perpendiculaire à l'axe 11A de l'âme en direction de l'arbre 1 par deux surfaces planes référencées 15 formant une jaquette. Ces deux surfaces planes 15 ont une longueur déterminée pour venir tangenter la surface externe 1A de l'arbre 1. Ce sont les extrémités de ces deux surfaces planes 15 qui assurent l'étanchéité entre le deuxième milieu 7 et le troisième milieu 8 autour de l'arbre mobile 1.

Ainsi, le joint assure l'étanchéité dynamique entre les éléments fixes et mobiles et l'étanchéité entre les deux parties 2 et 3 de l'élément fixe.

La réalisation de la figure 1 prévoit l'utilisation d'une troisième enveloppe 16 placée juste autour du ressort hélicoïdal 11 constituant l'âme élastique du joint pour maintenir ce ressort 11 dans la position idéale. Dans le cas de la figure 1, il s'agit d'une position annulaire autour de l'arbre 1. Cette troisième enveloppe 16 permet également qu'aucune impureté ou aucune partie de la deuxième enveloppe 14 ne vienne pénétrer entre deux spires du ressort 11.

La forme de cette troisième enveloppe 16 est celle d'une surface torique dont le cercle générateur ne se referme pas sur lui-même, de manière à pouvoir monter le ressort 11 à l'intérieur de celle-ci. La troisième enveloppe 16 doit donc être légèrement élastique, mais est de préférence constituée d'une très légère épaisseur de métal ductile, tel que l'aluminium, l'argent, le cuivre, le nickel, l'inox, l'inconel, etc.

La deuxième enveloppe 14 qui assure l'étanchéité entre les deux milieux internes 7 et 8 peut être de différentes constitutions. Elle peut en premier lieu être métallique et plus précisément être en tôle laminée, en fils accolés et orientés, ou en fils tissés. Elle peut également être en matière synthétique ou en matière minérale sous la forme d'une feuille moulée ou laminée, sous la forme de fibres accolées et orientées, ou bien sous la forme de fibres tissées. Dans tous les cas, elle est adaptée au diamètre de la surface externe 1A de l'arbre 1 par un rodage initial et in situ. Les deux extrémités des deux surfaces planes 15 de la jaquette peuvent éventuellement former un diamètre intérieur légèrement inférieur au diamètre de la surface externe 1A de l'élément mobile lorsque cette deuxième enveloppe 14 est réalisée dans une matière souple du genre fibre ou tissu.

A l'instar de la troisième enveloppe 16, la première enveloppe 12 peut également être constituée d'un métal ductile et laminable sous la forme d'une très fine tôle d'une épaisseur de quelques dixièmes de millimètre. Dans la réalisation de la figure 1, cette première enveloppe 12 a la forme d'une surface torique dont le cercle générateur ne se referme pas sur lui-même, mais se prolonge au contraire par deux surfaces 13 planes, parallèles entre elles et perpendiculaires à l'axe de l'âme 11 en direction de l'arbre 1, de manière à entourer les deux surfaces planes 15 de la jaquette. Toutefois, l'extrémité inférieure de chacune des deux surfaces planes 13 n'atteint pas la surface externe 1A de l'élément mobile.

La ductilité du métal utilisé pour constituer cette première enveloppe 12 permet d'assurer une étanchéité statique au niveau des deux parties 2 et 3 du carter fixe par un léger écrasement de ce métal. Ainsi, les éventuelles fuites pouvant habituellement avoir lieu dans le plan de joint sont ainsi annihilées.

Le joint flexible selon l'invention permet d'assurer, d'une part l'étanchéité entre le premier milieu 6 et l'ensemble des deuxième et troisième milieux 7 et 8 et, d'autre part, la séparation de ces deuxième et troisième milieux 7 et 8 en deux zones possédant des caractéristiques physiques légèrement différentes. La forme particulière du joint selon l'invention réduit au maximum le jeu de fonctionnement nécessaire existant entre l'élément mobile 1 et l'élément fixe 2, 3.

Un tel joint agit comme un filtre, retient les impuretés dans un des deuxième et troisième milieux 7 et 8 en conservant l'autre propre.

Il permet de diminuer la section de passage au maximum en assurant une perte de charge très importante et en limitant donc l'écoulement du fluide entre le deuxième et le troisième milieux 7 et 8, compte tenu des différences de pression pouvant exister entre eux.

Enfin, il agit comme un racloir dans le cas où de faibles vitesses sont mises en jeu entre l'élément mobile 1 et l'élément fixe 2 et 3, en maintenant l'élément mobile 1 propre. Il protège d'éventuels organes d'étanchéité voisins.

La nature des différents constituants du joint annulaire représenté sur la figure 1 doit bien entendu être déterminée par les conditions de service et d'utilisation du joint, notamment la pression, la température et la nature des fluides contenus dans les deuxième et troisième milieux 7 et 8.

La deuxième enveloppe 14 est de toute manière plus souple que la première 12 et la troisième 16. Sa rigidité doit toutefois être déterminée pour que la jaquette résiste efficacement à la différence de pression entre les deuxième et troisième milieux 7 et 8 sans pour autant détériorer par frottement la surface externe 1A de l'élément mobile 1.

Le joint annulaire selon l'invention ne se limite pas au seul mode de réalisation décrit sur la figure 1.

En se reportant à la figure 2, on peut également utiliser la structure du joint selon l'invention pour réaliser d'autres formes de joints. En effet, les surfaces planes 23 et 25 des première et deuxième enveloppes 22 et 24 de ce joint ne sont pas dirigées vers le centre de révolution d'un tel joint annulaire. Elles peuvent être dirigées dans une direction perpendiculaire à la précédente, de manière à ce que les extrémités des surfaces planes 25 de la jaquette soient coplanaires pour agir sur une surface plane qui peut être la surface radiale d'un épaulement annulaire. La structure d'un tel joint annulaire comprend toujours une âme centrale constituée d'un ressort 11 autour duquel sont placées au moins deux enveloppes 22 et 24. De préférence, une troisième enveloppe 26 est utilisée.

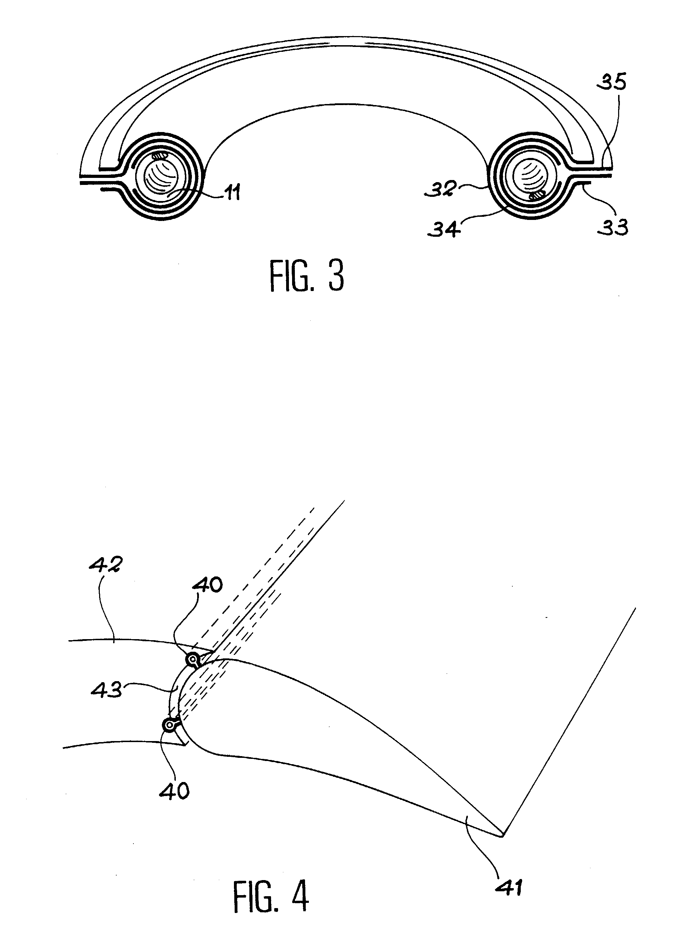

Le joint de la figure 3 utilise toujours la même structure. Par contre, les surfaces planes 33 et 35 des première et deuxième enveloppes 32 et 34 d'un tel joint sont orientées autour du joint annulaire dans une direction opposée à celle des surfaces planes du joint de la figure 1. Un tel joint peut donc être utilisé à l'intérieur d'un cylindre sur la surface interne duquel viennent affleurer les extrémités des surfaces planes 35 de la jaquette de la deuxième enveloppe 34.

La figure 4 montre un cas d'utilisation spéciale du joint selon l'invention. Dans ce cas d'utilisation, le joint n'est plus annulaire et le ressort et les enveloppes ne sont plus de forme torique. Le joint n'affecte alors plus une forme circulaire, mais un profil formé de parties rectilignes et/ou de parties courbes quelconques. Dans ce cas, le joint 40 est appliqué entre la gouverne 41 et l'aileron 42 d'un avion spatial du type "HERMES". On place ainsi deux parties rectilignes du joint 40 dans l'interstice 43 existant entre la gouverne mobile 41 et l'aileron fixe 42. Ce joint 40 est donc adapté à la forme de cet intervalle et donc au profil de l'aile de l'avion. Un tel joint 40 peut limiter la température au niveau de la gouverne 41 lors des rentrées de l'avion dans les couches denses de l'atmosphère. Il limite également les passages de filets d'air et réduit l'élévation de la température due au frottement.

## Revendications

1. Joint flexible assurant l'étanchéité entre deux volumes où règnent des pressions différentes, comprenant :
- une âme élastique ;
- une première enveloppe (12, 22, 32) ayant une forme de cavité non fermée, placée autour de l'âme pour assurer l'étanchéité entre un premier milieu (6) et les deux volumes ;
- une deuxième enveloppe (14, 24, 34) placée dans la première enveloppe (12, 22, 32) et autour de l'âme et ayant la forme d'une cavité non fermée, caractérisée en ce que la deuxième enveloppe (14, 24, 34) se prolonge à travers la partie non-fermée de la première enveloppe (12, 22, 32) dans sa partie non fermée par une jaquette formée de deux surfaces planes (15, 25, 35) parallèles entre elles et perpendiculaires ou parallèles à l'axe de l'âme et par l'extrémité desquelles l'étanchéité est assurée entre un deuxième milieu (7) et un troisième milieu (8) constituant les deux volumes et délimités tous les deux par un élément fixe (2, 3) et un élément mobile (1).

2. Joint selon la revendication 1, caractérisé en ce que l'âme élastique est constituée d'un ressort hélicoïdal (11), les première (12, 22, 32) et deuxième (14, 24, 34) enveloppes ayant une section cylindrique.

3. Joint selon la revendication 2, caractérisé en ce qu'il comprend une troisième enveloppe (16) placée autour du ressort (11) à l'intérieur de la deuxième enveloppe (14) pour maintenir le ressort (11) et empêcher la deuxième enveloppe (14) de pénétrer entre les spires du ressort (11).

4. Joint selon la revendication 3, caractérisé en ce qu'il est annulaire et en ce que les enveloppes (12, 22, 32, 24, 24, 34, 16) sont toriques.

5. Joint selon la revendication 4, caractérisé en ce que la troisième enveloppe (16) est en métal ductile et a la forme d'une surface torique dont le cercle générateur ne se referme pas sur lui-même.

6. Joint selon la revendication 4, caractérisé en ce que la deuxième enveloppe (14, 24, 34) est métallique, mais plus souple que les première (12, 22, 32) et troisième (16) enveloppes.

7. Joint selon la revendication 4, caractérisé en ce que la deuxième enveloppe (14, 24, 34) est en matériau synthétique.

8. Joint selon la revendication 4, caractérisé en ce que la deuxième enveloppe est en matière minérale.

9. Joint selon la revendication 4, caractérisé en ce que la première enveloppe (12, 22, 32) est en métal ductile et a la forme d'une surface torique dont le cercle générateur ne se referme pas sur lui-même et se prolonge par deux surfaces (13, 23, 33) planes, circulaires, parallèles entre elles et perpendiculaires ou parallèles à l'axe de l'âme, mais moins longues que celles (15, 25, 35) de la jaquette de la deuxième enveloppe (14, 24, 34).

## Patentansprüche

1. Flexible Dichtung um die Dichtheit zwischen zwei Volumen mit unterschiedlichen Drücken sicherzustellen, umfassend:
- einen elastischen Kern;
- eine erste Hülle (12, 22, 32) mit der Form eines nichtgeschlossenen Hohlraums, um den Kern herum angebracht, um die Dichtheit zwischen einem ersten Milieu (6) und den beiden Volumen sicherzustellen;
- eine zweite Hülle (14, 24, 34), in der ersten Hülle und um den Kern herum angebracht und die Form eines nichtgeschlossenen Hohlraums aufweisend,
**dadurch gekennzeichnet,** daß die zweite Hülle (14, 24, 34) sich durch den nichtgeschlossenen Teil der ersten Hülle hindurch verlängert mittels einer Ummantelung, gebildet durch zwei ebene Flächen (15, 25, 35), parallel zueinander und senkrecht oder parallel zu der Achse des Kerns, wobei durch das Ende von diesen die Dichtheit sichergestellt ist zwischen einem zweiten Milieu (7) und einem dritten Milieu (8), welche die beiden Volumen bilden, die alle beide begrenzt werden durch ein feststehendes Element (2, 3) und ein bewegliches Element (1).

2. Dichtung nach Anspruch 1, dadurch gekennzeichnet, daß der elastische Kern gebildet wird durch eine zylindrische Schraubenfeder (11) und die erste (12, 22, 32) und zweite (14, 24, 34) Hülle einen zylindrischen Querschnitt haben.

3. Dichtung nach Anspruch 2, dadurch gekennzeichnet, daß sie eine dritte Hülle (16) umfaßt, innerhalb der zweiten Hülle (14) um die Feder (11) herum angebracht, um die Feder (11) festzuhalten und die zweite Hülle (14) daran zu hindern, zwischen die Windungen der Feder (11) einzudringen.

4. Dichtung nach Anspruch 3, dadurch gekennzeichnet, daß sie ringförmig ist, und dadurch, daß die Hüllen (12, 22, 32, 24, 24, 34, 16) torisch sind.

5. Dichtung nach Anspruch 4, dadurch gekennzeichnet, daß die dritte Hülle (16) aus einem duktilen bzw. verformbaren Metall ist und die Form einer torischen Fläche aufweist, deren Erzeugerkreis sich nicht in sich selbst schließt.

6. Dichtung nach Anspruch 4, dadurch gekennzeichnet, daß die zweite Hülle (14, 24, 34) metallisch ist, aber biegsamer als die erste (12, 22, 32) und dritte (16) Hülle.

7. Dichtung nach Anspruch 4, dadurch gekennzeichnet, daß die zweite Hülle (14, 24, 34) aus einem synthetischen Material ist.

8. Dichtung nach Anspruch 4, dadurch gekennzeichnet, daß die zweite Hülle aus einem mineralischen Material ist.

9. Dichtung nach Anspruch 4, dadurch gekennzeichnet, daß die erste Hülle (12, 22, 32) aus einem verformbaren Material ist und die Form einer torischen Fläche aufweist, deren Erzeugerkreis sich nicht in sich selbst schließt und sich durch zwei kreisförmige ebene Flächen (13, 23, 33) verlängert, parallel zueinander und senkrecht oder parallel zur Achse des Kerns, aber weniger lang als diejenigen (15, 25, 35) der Ummantelung der zweiten Hülle (14, 24, 34).

## Claims

1. Flexible joint ensuring imperviousness between two volumes where there are different pressures comprising:
- an elastic core,
- a first casing (12, 22, 32) having the form of an unclosed cavity and placed around the core in order to ensure imperviousness between a first medium (6) and the two volumes,
- a second casing (14, 24, 34) placed in the first casing (12, 22, 32) and around the core and having the form of an unclosed cavity, characterized in that the second casing (14, 24, 34) is extended through the unclosed portion of the first casing (12, 22, 32) in its unclosed part by a jacket formed from two parallel, planar surfaces (15, 25, 35) perpendicular or parallel to the axis of the core and by the end of which imperviousness is ensured between a second medium (7) and a third medium (8) constituting the two volumes and both defined by a fixed element (2, 3) and a mobile element (1).

2. Joint according to claim 1, characterized in that the elastic core is constituted by a helical spring (11), the first (12, 22, 32) and second (14, 24, 34) casings having a cylindrical cross-section.

3. Joint according to claim 2, characterized in that it has a third casing (16) placed around the spring (11) within the second casing (14) to maintain the spring (11) in position and prevent the second casing (14) from penetrating between the turns of the spring (11).

4. Joint according to claim 3, characterized in that it is annular and in that the casings (12, 22, 32, 24, 34, 16) are toroidal.

5. Joint according to claim 4, characterized in that the third casing (16) is of ductile metal and is in the form of a toroidal surface, whose generating circle is not reclosed on itself.

6. Joint according to claim 4, characterized in that the second casing (14, 24, 34) is metallic, but more flexible than the first (12, 22, 32) and third (16) casings.

7. Joint according to claim 4, characterized in that the second casing (14, 24, 34) is of synthetic material.

8. Joint according to claim 4, characterized in that the second casing is of mineral material.

9. Joint according to claim 4, characterized in that the first casing (12, 22, 32) is of ductile metal and is in the form of a toroidal surface, whose generating circle does not reclose on itself and is extended by two planar, circular, parallel surfaces (13, 23, 33), which are perpendicular or parallel to the axis of the core, but shorter than those (15, 25, 35) of the jacket of the second casing (14, 24, 34).
